# EUROPÄISCHE PATENTANMELDUNG

(11) **EP 4 358 379 A1**
(43) Veröffentlichungstag der Anmeldung: **24.04.2024**
(21) Anmeldenummer: 22202926.6
(22) Anmeldetag: 21.10.2022
(51) Int. Cl.: H02M 1/00, H02M 3/335

(54) **VERFAHREN ZUM BETREIBEN EINER DUALEN AKTIVBRÜCKE MITTELS EINER ELEKTRONISCHEN RECHENEINRICHTUNG, COMPUTERPROGRAMMPRODUKT, COMPUTERLESBARES SPEICHERMEDIUM, ELEKTRONISCHE RECHENEINRICHTUNG SOWIE DUALE AKTIVBRÜCKE**

(71) Anmelder: Siemens Aktiengesellschaft, 80333 München (DE)
(72) Erfinder: Blum, Manuel, 85521 Ottobrunn (DE); Simon, Alexander, 81829 München (DE); von den Hoff, Daniel, 52074 Aachen (DE)
(74) Vertreter: Siemens Patent Attorneys

(57) **Zusammenfassung**

Die Erfindung betrifft ein Verfahren zum Betreiben einer dualen Aktivbrücke (10), wobei die duale Aktivbrücke (10) mit zumindest einer primärseitigen und einer sekundärseitigen Vollbrücke (12, 14) bereitgestellt wird, wobei zwischen der primärseitigen und der sekundärseitigen Vollbrücke (12, 14) eine Transformatoreinrichtung (16) bereitgestellt wird, und wobei die Vollbrücken (12, 14) mittels einer elektronischen Recheneinrichtung (18) angesteuert werden, wobei die primärseitige und die sekundärseitige Vollbrücke (12, 14) mit jeweiligen Halbbrücken (20, 22, 24, 26) bereitgestellt werden, wobei in einem ersten Takt (30) zuerst die erste und die dritte Halbbrücke (20, 24) geschaltet werden bevor die zweite und vierte Halbbrücke (22, 26) geschaltet werden und in einem zweiten Takt zuerst die zweite und die vierte Halbbrücke (22, 26) geschaltet werden, bevor die erste und die dritte Halbbrücke (20, 26) geschaltet werden. Ferner betrifft die Erfindung ein Computerprogrammprodukt, ein computerlesbares Speichermedium, eine elektronische Recheneinrichtung (18) sowie eine duale Aktivbrücke (10).

## Beschreibung

Die Erfindung betrifft ein Verfahren zum Betreiben einer dualen Aktivbrücke mittels einer elektronischen Recheneinrichtung, wobei die duale Aktivbrücke mit zumindest einer primärseitigen Vollbrücke und einer sekundärseitigen Vollbrücke bereitgestellt wird, wobei zwischen der primärseitigen Vollbrücke und der sekundärseitigen Vollbrücke eine Transformatoreinrichtung bereitgestellt wird, und wobei die primärseitige Vollbrücke und die sekundärseitige Vollbrücke mittels der elektronischen Recheneinrichtung angesteuert werden. Ferner betrifft die Erfindung ein Computerprogrammprodukt, ein computerlesbares Speichermedium, eine elektronische Recheneinrichtung sowie eine duale Aktivbrücke.

Aus dem Stand der Technik ist bereits bekannt, dass eine Topologie für bidirektionale, isolierte Gleichspannungswandler (DCDC-Wandler) eine sogenannte Dual-Active-Bridge sein kann, wobei diese beispielsweise einphasig ausgebildet sein kann. Dabei werden sowohl auf der Primärseite als auch auf der Sekundärseite entsprechende Vollbrücken verwendet. Im AC-Kreis zwischen den Vollbrücken ist wiederum eine Transformatoreinrichtung verbaut. Zur Ansteuerung sind entsprechende verschiedene Modulationsvarianten möglich. Um einen größeren Leistungsbereich effizient abdecken zu können, wird oft eine Kombination aus Trapez (TZM)- und Dreieckmodulation (TRM) angewendet. Beide Varianten gehen im Betrieb nahtlos ineinander über. Die Verluste eines DCDC-Wandlers werden je nach Schaltertyp oft von Einschalt- und Ausschaltverlusten dominiert, weshalb eine Minimierung dieser im Fokus steht. Bei den vorgestellten Modulationen schaltet jeder Schalter einmal pro Periode ein (Gate = 1) und einmal aus (Gate = 0). Bei TZM schalten dabei zwei Halbbrücken dauerhaft unter Zero-Current-Switching (ZCS) ein und aus. Eine Halbbrücke davon auf der Primär- die andere auf der Sekundärseite. Dabei wird bei Nullstrom geschalten, was sehr geringe Verluste bedeutet. Die anderen beiden Halbbrücken schalten zwar mit Zero-Voltage-Switching (bei Nullspannung insbesondere wenig Verluste) ein, jedoch hart aus. Dabei werden erhebliche Ausschaltverluste generiert. Bei TRM verhält es sich ähnlich. Hier schalten dauerhaft sogar drei Halbbrücken unter ZCS. Die verbleibende Halbbrücke schaltet erneut nur beim Einschalten unter der ZVS-Bedingung. Das Ausschalten ist wiederum hart und erzeugt ebenso erhebliche Ausschaltverluste. Diese kritische Halbbrücke ist je nach Leistungsflussrichtung entweder auf Primär- oder Sekundärseite. Der Großteil der Schaltverluste fällt somit in beiden Verfahren in stationären Arbeitspunkten in denselben Halbbrücken an. Dies führt zu deutlich asymmetrischer Belastung der verschiedenen Halbbrücken, was sich beispielsweise in unterschiedlich starker Erwärmung widerspiegelt.

Aufgabe der vorliegenden Erfindung ist es, ein Verfahren, ein Computerprogrammprodukt, ein computerlesbares Speichermedium, eine elektronische Recheneinrichtung sowie eine duale Aktivbrücke zu schaffen, mittels welchen ein verbesserter Betrieb der dualen Aktivbrücke ermöglicht ist.

Diese Aufgabe wird durch ein Verfahren, ein Computerprogrammprodukt, ein computerlesbares Speichermedium, eine elektronische Recheneinrichtung sowie eine duale Aktivbrücke gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer dualen Aktivbrücke mittels einer elektronischen Recheneinrichtung, wobei die duale Aktivbrücke mit zumindest einer primärseitigen Vollbrücke und einer sekundärseitigen Vollbrücke bereitgestellt wird, wobei zwischen der primärseitigen Vollbrücke und der sekundärseitigen Vollbrücke eine Transformatoreinrichtung bereitgestellt wird, und wobei die primärseitige Vollbrücke und die sekundärseitige Vollbrücke mittels der elektronischen Recheneinrichtung angesteuert werden.

Es ist dabei vorgesehen, dass die primärseitige Vollbrücke mit einer ersten Halbbrücke und mit einer zweiten Halbbrücke bereitgestellt wird und die sekundärseitige Vollbrücke mit einer dritten Halbbrücke und einer vierten Halbbrücke bereitgestellt wird, wobei in einem ersten Takt zum Betreiben der dualen Aktivbrücke zuerst die erste und die dritte Halbbrücke geschaltet werden, bevor die zweite und vierte Halbbrücke geschaltet werden und in einem auf den ersten Takt folgenden zweiten Takt zuerst die zweite und die vierte Halbbrücke geschaltet werden, bevor die erste und die dritte Halbbrücke geschaltet werden.

Die Reihenfolge der Schalthandlungen ist jedoch rein beispielhaft für den Erfindungsgedanken anzusehen. Für den Fachmann ist ersichtlich, dass die Schalthandlungen abhängig von einem Spannungsverhältnis von einer Eingangsspannung auf der Primärseite Uin und einer Ausgangsspannung an der Sekundärseite Uout ist sowie auch abhängig von einer Leistungsflussrichtung.

Insbesondere kann somit ein Alternieren der Schaltmuster bereitgestellt werden, wodurch die Verluste der beiden Halbbrücken innerhalb einer Vollbrücke symmetriert werden. Unter Einhaltung einer vorgegebenen maximalen Modulverlustleistung kann nun eine deutlich höhere Gesamtleistung erreicht werden als es ohne ein Alternieren möglich ist. Das Verfahren hat keine Auswirkungen auf das restliche Systemverhalten und benötigt keine zusätzlichen Hardwarevorkehrungen.

Modulationsbedingt lassen sich die Transformatorspannungen insbesondere durch zwei unterschiedliche Schaltmuster identisch erzeugen. Diese Schaltmuster unterscheiden sich nur darin, dass eine entsprechende Nullspannung der entsprechenden Vollbrücke entweder durch Klemmen auf positive respektive negative Zwischenkreisspannung umgesetzt wird. Diese Möglichkeit wird entsprechend genutzt, sodass die beiden Schaltmuster von Periode zu Periode abgewechselt werden. Dies wird als "alternierendes Schaltmuster" bezeichnet. Hierdurch wird auch der kritische, harte Ausschaltvorgang zwischen den Halbbrücken abgewechselt. Daraus resultiert eine symmetrische Verteilung der Verluste zwischen den Halbbrücken sowohl innerhalb der Primär- als auch innerhalb der Sekundärseite.

Insbesondere kann somit eine Nullzeigeralternierung beziehungsweise ein Verlustbalancing bereitgestellt werden. Ferner kann insbesondere eine sogenannte symmetrische Verlustaufteilung auf die beiden Halbbrücken primärseitig beziehungsweise sekundärseitig realisiert werden.

Dadurch kann insbesondere eine Verbesserung der Auslegung der entsprechenden Halbbrücken realisiert werden. Insbesondere können somit die entsprechenden Schaltelemente innerhalb der Halbbrücke kleiner dimensioniert werden, da nicht der dominierende Verlustleistungsanteil auf ein einziges Schaltelement zu verzeichnen ist, sondern sich die Verlustleistung nun auf die entsprechenden Halbbrücken symmetrisch aufteilt.

Gemäß einer vorteilhaften Ausgestaltungsform sind die Halbbrücken als MOSFET-Halbbrücken bereitgestellt. Alternativ können die Halbbrücken auch als IGBT-Halbbrücken bereitgestellt werden. Insbesondere kann somit die duale Aktivbrücke mit unterschiedlichen Schaltelementen bereitgestellt werden, wodurch die duale Aktivbrücke für unterschiedliche Einsatzzwecke genutzt werden kann.

Eine weitere vorteilhafte Ausgestaltungsform sieht vor, dass im ersten Takt die dritte Halbbrücke zeitlich verzögert zur ersten Halbbrücke geschaltet wird und im zweiten Takt die vierte Halbbrücke zeitlich verzögert zur zweiten Halbbrücke geschaltet wird. Insbesondere wird die dritte Halbbrücke zeitlich verzögert nach der ersten Halbbrücke geschaltet und die vierte Halbbrücke wird zeitlich verzögert nach der zweiten Halbbrücke geschaltet. Somit kann zuverlässig die duale Aktivbrücke, welche auch als Dual Active Bridge bezeichnet werden kann, geschaltet, wodurch insbesondere ein verbesserter Gleichspannungswandler bereitgestellt werden kann.

Eine weitere vorteilhafte Ausgestaltungsform sieht vor, dass die Transformatoreinrichtung mit spezifischer Streuinduktivität und definiertem Übersetzungsverhältnis bereitgestellt wird. Somit ist ermöglicht, dass je nach Anwendungszweck die duale Aktivbrücke genutzt werden kann. Somit kann die duale Aktivbrücke bei unterschiedlichen Einsatzzwecken hochfunktionell eingesetzt werden.

Ferner hat es sich als vorteilhaft erwiesen, wenn mittels der dualen Aktivbrücke ein Gleichspannungswandler bereitgestellt wird. Insbesondere wird mittels der dualen Aktivbrücke ein einphasiger Gleichspannungswandler bereitgestellt.

Eine weitere vorteilhafte Ausgestaltungsform sieht vor, dass im Betrieb der dualen Aktivbrücke der erste Takt und der zweite Takt wiederholt werden. Insbesondere wird somit das Balancing über die gesamte Betriebslaufzeit der dualen Aktivbrücke realisiert, wodurch die Verlustleistung symmetrisch auf die erste Halbbrücke und die zweite Halbbrücke beziehungsweise die dritte Halbbrücke und vierte Halbbrücke verteilt werden können.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt kann auch als Computerprogramm bezeichnet werden.

Ferner betrifft die Erfindung auch ein computerlesbares Speichermedium mit einem Computerprogramm nach dem vorhergehenden Aspekt.

Ein weiterer Aspekt der Erfindung betrifft auch eine elektronische Recheneinrichtung zum Betreiben einer dualen Aktivbrücke, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise elektronische Bauteile, wie Prozessoren, Schaltkreise, insbesondere integrierte Schaltkreise, sowie weitere elektronische Bauteile auf, um entsprechende Verfahrensschritte durchführen zu können.

Weiterhin betrifft die Erfindung auch eine duale Aktivbrücke mit zumindest einer primärseitigen Vollbrücke, einer sekundärseitigen Vollbrücke, einer Transformatoreinrichtung und einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie der dualen Aktivbrücke anzusehen. Die elektronische Recheneinrichtung sowie die duale Aktivbrücke weisen insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung wird nun anhand der Figuren beziehungsweise Zeichnungen näher erläutert.

### Dabei zeigen:

- FIG 1: ein schematisches Blockschaltbild gemäß einer Ausführungsform einer dualen Aktivbrücke;
- FIG 2: ein schematisches Ablaufdiagramm gemäß einer Ausführungsform des Verfahrens; und
- FIG 3: ein schematisches Diagramm gemäß einer Ausführungsform der Erfindung.

In den Figuren sind gleiche oder funktionsgleiche Elemente mit den gleichen Bezugszeichen versehen.

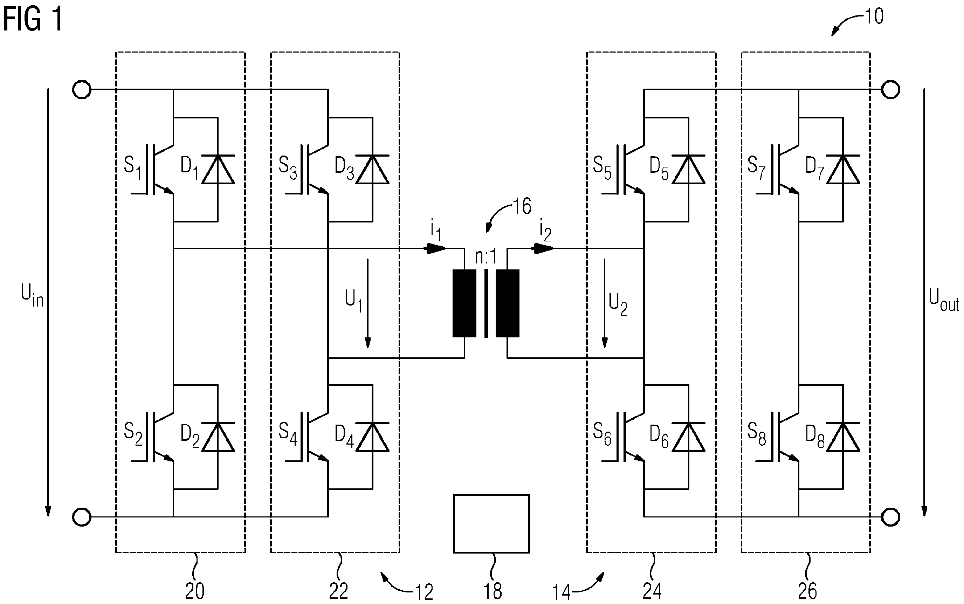

FIG 1 zeigt ein schematisches Blockschaltbild gemäß einer Ausführungsform einer dualen Aktivbrücke 10. Die duale Aktivbrücke 10 weist zumindest eine primärseitige Vollbrücke 12 sowie eine sekundärseitige Vollbrücke 14 auf. Ferner weist die duale Aktivbrücke 10 eine Transformatoreinrichtung 16 sowie rein schematisch dargestellt eine elektronische Recheneinrichtung 18 auf. Die primärseitige Vollbrücke 12 weist eine erste Halbbrücke 20 sowie eine zweite Halbbrücke 22 auf. Die sekundärseitige Vollbrücke 14 weist eine dritte Halbbrücke 24 sowie eine vierte Halbbrücke 26 auf. Die jeweiligen Halbbrücken 20, 22, 24, 26 weisen wiederum jeweils zwei Schaltelemente S1, S2, S3, S4, S5, S6, S7, S8 auf. Die erste Halbbrücke 20 weist insbesondere ein erstes Schaltelement S1 sowie ein zweites Schaltelement S2 auf. Die zweite Halbbrücke 22 weist ein drittes Schaltelement S3 sowie ein viertes Schaltelement S4 auf. Die dritte Halbbrücke 24 weist ein fünftes Schaltelement S5 sowie ein sechstes Schaltelement S6 auf. Die vierte Halbbrücke 26 weist ein siebtes Schaltelement S7 sowie ein achtes Schaltelement S8 auf. Im folgenden Ausführungsbeispiel sind die Schaltelemente S1 bis S8 insbesondere als sogenannte IGBT-Halbleiterelemente ausgebildet. Alternativ können diese auch als MOSFETs ausgebildet sein. Ein jedes Schaltelement S1 bis S8 wiederum weist jeweilige zugehörige, anti-parallel Dioden D1 bis D8 auf.

Insbesondere ist die duale Aktivbrücke 10 als Gleichspannungswandler ausgebildet. Insbesondere ist die duale Aktivbrücke 10 als einphasiger Gleichspannungswandler ausgebildet. Ferner kann insbesondere vorgesehen sein, dass die Transformatoreinrichtung 16 mit einer spezifischen Streuinduktivität und einem definierten Übersetzungsverhältnis n:1 bereitgestellt wird.

Ferner zeigt die Fig. 1 noch eine Eingangsspannung Uᵢₙ auf der Primärseite sowie eine Ausgangsspannung Uout auf der Sekundärseite. Des Weiteren ist eine primärseitige Transformatorspannung u₁ und eine sekundärseitige Transformatorspannung u₂ gezeigt. Ferner ist ein primärseitiger Strom I₁ und ein sekundärseitiger Strom I₂ gezeigt.

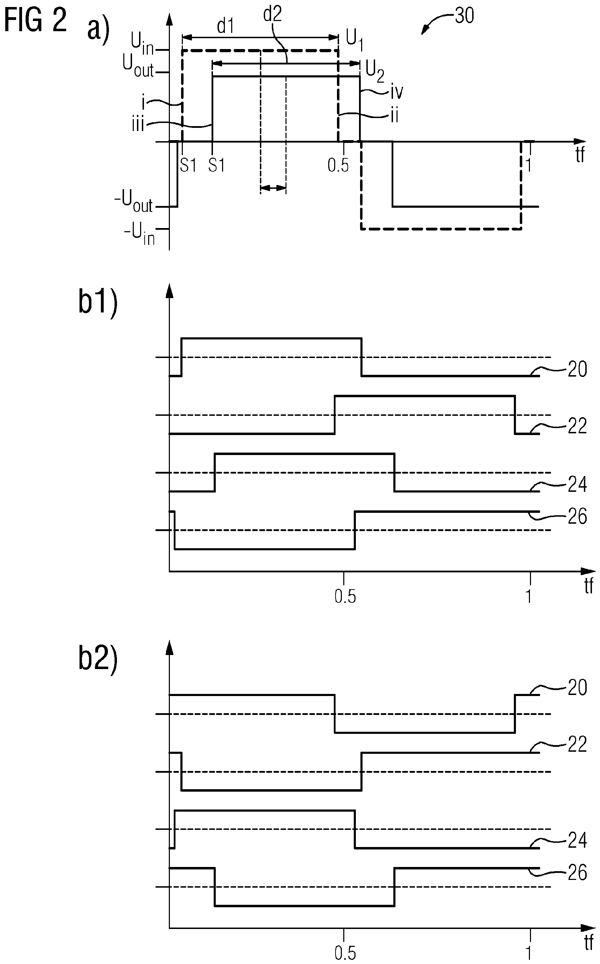

FIG 2 zeigt ein schematisches Ablaufdiagramm gemäß einer Ausführungsform des Verfahrens für einen Arbeitspunkt mit positiver Leistungsflussrichtung und Uᵢₙ>n*Uₒᵤₜ. Insbesondere sind in einem Teil a) der FIG 2 die charakteristischen Zeiten zur Beschreibung der primär- und sekundärseitigen Transformatorspannung mit den Schaltzeitpunkten i bis iv gezeigt. Hierbei sind auch die Shaltdauern d1, d2 gezeigt. Auf der Abszisse beziehungsweise auf den Abszissen ist die Zeit t beziehungsweise die Frequenz f aufgetragen. Die Ordinaten zeigen insbesondere eine Spannung. Im Teil b1) wiederum ist eine erste Schaltmöglichkeit gemäß dem erfindungsgemäßen Verfahren gezeigt und im zweiten Teil b2) ist eine alternative Schaltmöglichkeit, um ebenfalls die in a) dargestellten Transformatorspannungen zu generieren, gezeigt.

Insbesondere zeigen die Teile b1, b2 die Schaltsignale der jeweiligen Halbbrücken 20, 22, 24, 26.

Insbesondere zeigt somit die FIG 2 das Verfahren zum Betreiben der dualen Aktivbrücke 10 mittels der elektronischen Recheneinrichtung 18. Die duale Aktivbrücke 10 wird dabei mit der primärseitigen Vollbrücke 12 sowie mit der sekundärseitigen Vollbrücke 14 bereitgestellt, wobei zwischen der primärseitigen Vollbrücke 12 und der sekundärseitigen Vollbrücke 14 die Transformatoreinrichtung 16 ausgebildet ist.

Es ist erfindungsgemäß vorgesehen, dass die primärseitige Vollbrücke 12 mit der ersten Halbbrücke 20 und der zweiten Halbbrücke 22 bereitgestellt wird und die sekundärseitige Vollbrücke 14 mit der dritten Halbbrücke 24 und der vierten Halbbrücke 26 bereitgestellt wird, wobei in einem ersten Takt 30 zuerst die erste und die dritte Halbbrücke 20, 24 geschaltet werden, bevor die zweite und vierte Halbbrücke 22, 26 geschaltet werden und in einem auf den ersten Takt 30 folgenden zweiten Takt zuerst die zweite und die vierte Halbbrücke 22, 26 geschaltet werden, bevor die erste und die dritte Halbbrücke 20, 24 geschaltet werden. Insbesondere zeigt somit der Teil b1) den ersten Takt 30 und der Teil b2) den zweiten Takt. Es kann auch vorgesehen sein, dass im ersten Takt 30 das Schaltmuster nach b2) durchgeführt wird und im zweiten Takt das Schaltmuster nach b1) durchgeführt wird.

Insbesondere kann ferner vorgesehen sein, dass im ersten Takt 30 die dritte Halbbrücke 24 zeitlich verzögert zur ersten Halbbrücke 20 geschaltet wird und im zweiten Takt die vierte Halbbrücke 26 zeitlich verzögert zur zweiten Halbbrücke 26 geschaltet wird. Insbesondere kann ferner vorgesehen sein, dass im Betrieb der dualen Aktivbrücke 10 der erste Takt 30 und der zweite Takt wiederholt werden.

Insbesondere ist somit vorgesehen, da modulationsbedingt sich die Transformatorspannung durch zwei unterschiedliche Schaltmuster, wie im Figurenteil b1) und b2) gezeigt, identisch erzeugen lassen, dies auch entsprechend genutzt wird. Diese Schaltmuster unterscheiden sich nur darin, dass die Nullspannung der entsprechenden Vollbrücke 12, 14 entweder durch Klemmen auf positiver respektive negativer Zwischenkreisspannung umgesetzt wird. Diese Möglichkeit wird dementsprechend genutzt, dass die beiden Schaltmuster von Periode zu Periode abgewechselt werden. Dies wird als alternierendes Schaltmuster bezeichnet. Hierdurch wird auch der kritische, harte Ausschaltvorgang zwischen den Halbbrücken 20, 22, sowie 24, 26 abgewechselt. Daraus resultiert eine symmetrische Verteilung der Verluste zwischen den Halbbrücken 20, 22, 24, 26 sowohl innerhalb der Primär- als auch innerhalb der Sekundärseite.

Das gleiche Verfahren kann auch im Dreieckmodulationsmodus (TRM) angewendet werden. Hier ist es jedoch ausreichend, die Schaltmuster nur in der jeweiligen Vollbrücke 12, 14 zu alternieren, in welcher im aktuellen Betriebspunkt der harte Ausschaltvorgang vorliegt.

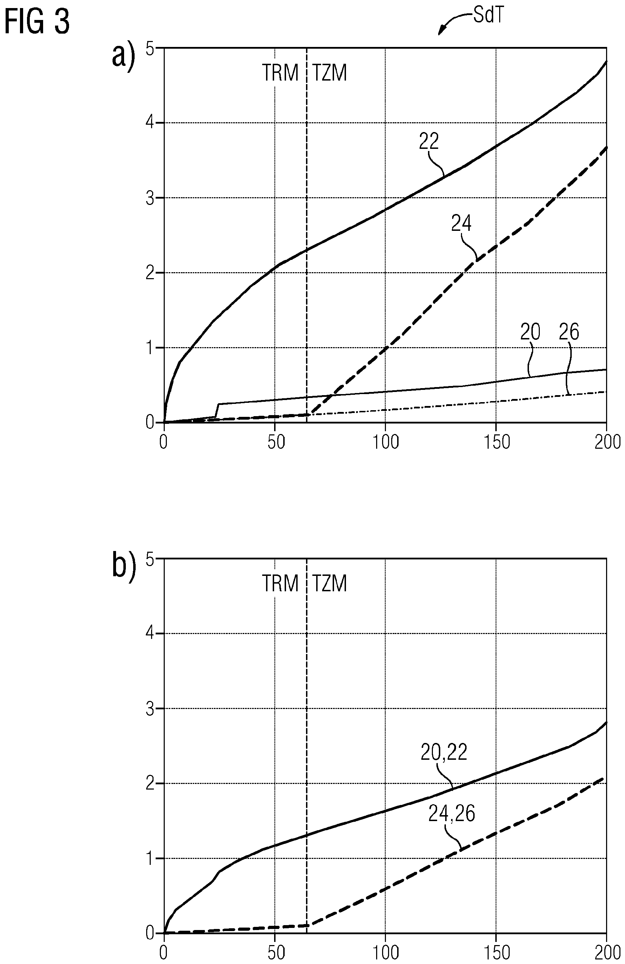

FIG 3 zeigt beispielhaft das Verfahren gemäß dem Stand der Technik SdT auf der linken Seite sowie das erfindungsgemäße Verfahren auf der rechten Seite. Auf der linken Seite ist insbesondere die Verlustleistung je Halbbrücke beziehungsweise Zweig für die ursprünglich festen Schaltmuster für ein beispielhaftes System zwischen 0 Kilowatt und 200 Kilowatt Ausgangsleistung gezeigt. Auf der rechten Seite wiederum ist das alternierende Schaltmuster gezeigt, gemäß der Erfindung ebenfalls zwischen 0 Kilowatt und 200 Kilowatt Ausgangsleistung. Die maximale Belastung der kritischen Halbbrücke 20, 22, 24, 26 ist nun deutlich reduziert.

### Bezugszeichenliste

- 10: duale Aktivbrücke
- 12: primärseitige Vollbrücke
- 14: sekundärseitige Vollbrücke
- 16: Transformatoreinrichtung
- 18: elektronische Recheneinrichtung
- 20: erste Halbbrücke
- 22: zweite Halbbrücke
- 24: dritte Halbbrücke
- 26: vierte Halbbrücke
- S1 bis S8: Schalter
- D1 bis D8: Dioden
- U_{In}: Eingangsspannung
- U_{Out}: Ausgangsspannung
- u1: primärseitige Transformatorspannung
- u2: sekundärseitige Transformatorspannung
- i₁: primärseitiger Strom
- i₂: sekundärseitiger Strom
- N:1: Übersetzungsverhältnis
- i bis iv: Schaltzeitpunkt
- d1, d2: Schaltdauer
- t: Zeit
- f: Frequenz

## Patentansprüche

1. Verfahren zum Betreiben einer dualen Aktivbrücke (10) mittels einer elektronischen Recheneinrichtung (18), wobei die duale Aktivbrücke (10) mit zumindest einer primärseitigen Vollbrücke (12) und einer sekundärseitigen Vollbrücke (14) bereitgestellt wird, wobei zwischen der primärseitigen Vollbrücke (12) und der sekundärseitigen Vollbrücke (14) eine Transformatoreinrichtung (16) bereitgestellt wird, und wobei die primärseitige Vollbrücke (14) und die sekundärseitige Vollbrücke (16) mittels der elektronischen Recheneinrichtung (18) angesteuert werden,
**dadurch gekennzeichnet, dass**
die primärseitige Vollbrücke (12) mit einer ersten Halbbrücke (20) und mit einer zweiten Halbbrücke (22) bereitgestellt wird und die sekundärseitige Vollbrücke (14) mit einer dritten Halbbrücke (24) und einer vierten Halbbrücke (26) bereitgestellt wird, wobei in einem ersten Takt (30) zum Betreiben der dualen Aktivbrücke (10) zuerst die erste und die dritte Halbbrücke (20, 24) geschaltet werden bevor die zweite und vierte Halbbrücke (22, 26) geschaltet werden und in einem auf den ersten Takt (30) folgenden zweiten Takt zuerst die zweite und die vierte Halbbrücke (22, 26) geschaltet werden, bevor die erste und die dritte Halbbrücke (20, 26) geschaltet werden.

2. Verfahren nach Anspruch 1, **dadurch gekennzeichnet, dass** die Halbbrücken (20, 22, 24, 26) als MOSFET Halbbrücken bereitgestellt werden.

3. Verfahren nach Anspruch 1, **dadurch gekennzeichnet, dass** die Halbbrücken (20, 22, 24, 26) als IGBT Halbbrücken bereitgestellt werden.

4. Verfahren nach einem der vorhergehenden Ansprüche, **dadurch gekennzeichnet, dass**
im ersten Takt (30) die dritte Halbbrücke (24) zeitlich verzögert zur ersten Halbbrücke (20) geschaltet wird und im zweiten Takt die vierte Halbbrücke (26) zeitlich verzögert zur zweiten Halbbrücke (22) geschaltet wird.

5. Verfahren nach einem der vorhergehenden Ansprüche, **dadurch gekennzeichnet, dass**
die Transformatoreinrichtung (16) mit spezifischer Streuinduktivität und definiertem Übersetzungsverhältnis (n:1) bereitgestellt wird.

6. Verfahren nach einem der vorhergehenden Ansprüche, **dadurch gekennzeichnet, dass**
mittels der dualen Aktivbrücke (10) ein Gleichspannungswandler bereitgestellt wird.

7. Verfahren nach Anspruch 6, **dadurch gekennzeichnet, dass** ein einphasiger Gleichspannungswandler bereitgestellt wird.

8. Verfahren nach einem der vorhergehenden Ansprüche, **dadurch gekennzeichnet, dass**
im Betrieb der dualen Aktivbrücke (10) der erste Takt (30) und der zweite Takt wiederholt werden.

9. Computerprogrammprodukt mit Programmcodemitteln, welche eine elektronische Recheneinrichtung (18) dazu veranlassen, wenn die Programmcodemittel von der elektronischen Recheneinrichtung (18) abgearbeitet werden, ein Verfahren nach einem der Ansprüche 1 bis 8 durchzuführen.

10. Computerlesbares Speichermedium mit einem Computerprogrammprodukt nach Anspruch 9.

11. Elektronische Recheneinrichtung (18) zum Betreiben einer dualen Aktivbrücke (10), wobei die elektronische Recheneinrichtung (18) zum Durchführen eines Verfahrens nach einem der Ansprüche 1 bis 8 ausgebildet ist.

12. Duale Aktivbrücke (10) mit zumindest einer primärseitigen Vollbrücke (12), einer sekundärseitigen Vollbrücke (14), einer Transformatoreinrichtung (16) und einer elektronischen Recheneinrichtung (18) nach Anspruch 11.
